Europäisches Patentamt

European Patent Office

Office européen des brevets

(11) Publication number: **0 073 357**
**A2**

## (12) EUROPEAN PATENT APPLICATION

(21) Application number: **82107044.8**

(22) Date of filing: **04.08.82**

(51) Int. Cl.³: **B 65 D 6/16**

(30) Priority: **19.08.81 IT 1260781**
**27.04.82 IT 1251482**
**27.04.82 IT 1251782**

(43) Date of publication of application: **09.03.83**
**Bulletin 83/10**

(84) Designated Contracting States: **AT BE CH DE FR GB LI
LU NL SE**

(71) Applicant: **NESPAK S.p.A. Società Generale per
L'Imballaggio, 1, Via Damano, I-48024 Massa Lombarda
(IT)**

(72) Inventor: **Martelli, Nerio, 6 Via Cavaioni, I-40136 Bologna
(IT)**

(74) Representative: **Porsia, Bruno et ai, c/o Succ. Ing.
Fischetti & Weber Via Caffaro 3, I-16124 Genova (IT)**

(54) **Assemblable and stackable crate of plastic material and apparatus for assembling same.**

(57) An assemblable and stackable crate of plastic material, particularly of injection-molded plastic material, for the packaging of agricultural products, consists of a bottom (F) and of sidewalls (P1, P2) which in a second operative step are secured in their erected position of use to the bottom (F). Between each one of the sidewalls (P1, P2) and the bottom (F) there are provided articulated connection means (1, 3, 4; 5, 6; L) which permit to raise the sidewalls (P1, P2), initially coplanar to the crate bottom (F), in order to form the crate by an angular movement through about 90°. Fastening joints are also provided between each one of the sidewalls (P1, P2) and the bottom (F), as well as between two adjacent sidewalls (P1 and P2), each fastening joint consisting of at least two cooperating connection elements (7, 8; 9, 10; 12; 11, 13) which are interengageable following the relative raising of the crate sidewall or sidewalls with respect to the bottom, and which are adapted for preventing the separation of the crate sidewalls from the bottom perpendicularly thereto, and also the separation of the sidewalls from each other.

- 1 -

NESPAK S.p.A. Società Generale per l'Imballaggio,

Massa Lombarda, Province of Ravenna, Italy.

## Assemblable and stackable crate of plastic material and apparatus for assembling same.

Object of the present invention is an assemblable and stackable crate of plastic material, particularly of injection-molded plastic material, for the packaging of any products, particularly of agricultural products. The said crate consists of a bottom and of sidewalls which in a subsequent step are fastened to the crate bottom in their erected position of use.

The said assemblable crates afford the advantage that it is possible to store and transport same in a very small space, and therefore in a simple and economical manner. Another advantage of said crates resides in the fact that, since their components are of a small thickness and therefore require molds which are not deep, they are easy and simple to be manufactured.

The known crates of the above-disclosed type however have the drawback that their assembly is still very laborious, and must be effected manually, with an appreciable waste of time and use of man-power.

The invention aims to eliminate the aforementioned drawback and to provide a crate of the type as above described, to be easily and quickly assembled by the user, and which renders it possible to effect its assembly even mechanically, and therefore automatically, while its manufacture, particularly from injected plastic material, is simplified, and its structure, when a crate is in its assembled condition, is firmer and stronger, which makes it possible also the stacking of the filled crates upon one another.

This problem is solved by the invention by providing a crate of the type as described, characterized in that between each one of its sidewalls and its bottom articulated connection means are provided which permit to raise the crate sidewalls, which initially are coplanar to the crate bottom, by an angular movement through about 90° in order to form the crate. Between each one of the sidewalls and the bottom, as well as between each two of the adjacent sidewalls, fastening means are provided consisting each of at least two cooperating connection elements which engage each other as a consequence of the relative raising of the crate sidewall or sidewalls with respect to its bottom, and which are adapted for preventing the separation of the crate sidewalls from its bottom perpendicularly thereto, and also the separation of the crate sidewalls from each other.

Preferably, according to one advantageous embo=
diment of the invention, the crate sidewalls are manu=
factured separately from the crate bottom and are joined
thereto upon assembling the crate, while the articulated
connection means consist of at least one hinged joint
comprising at least two complementary hinged connection
elements which are respectively provided on the edges of
the crate bottom and on the corresponding edge of the
crate sidewall, and which are mutually engageable by the
relative translation of said bottom and sidewall into a
coplanar position, parallelly to an assembly plane and
perpendicularly to the associated edges of the crate
bottom and sidewall, the said hinged connection elements
being made in such a manner that they become fastened
together not later than the beginning of the subsequent
raising of the crate sidewall with respect to its bottom
by an angular movement through about 90°, so that the
separation of the crate sidewall from the crate bottom in
a direction parallel thereto, is prevented.

It is apparent that the assembly of the crate
bottom and sidewalls to form the crate according to the
invention, is effected by two successive, extremely simple
operations. By the first assembly operation, the crate
sidewalls, which are set down onto an assembly plane
around the crate bottom also resting on said plane, are
translated parallelly to the assembly plane, each one
toward the corresponding side edge of the crate bottom and perpendicularly thereto, whereby the complementary hinged connection elements provided on the side edges of the crate bottom and on the associated edge of the crate sidewalls, and if the case also the cooperating connection elements of some temporary fastening means, are thus interengaged. Subsequently, the crate sidewalls are erected with respect to its bottom by an angular movement of approximately 90°. Thus, not later than the beginning of the angular movement for raising the crate sidewalls with respect to the crate bottom, the hinged connection elements become interengaged, that the separation is prevented of the crate sidewalls from the crate bottom parallelly to the assembly plane, and an easy and regular raising of the sidewalls with respect to the bottom of a crate is guaranteed. Already upon effecting the translation of the crate sidewalls toward the crate bottom, parallelly to the assembly plane, the cooperating connection elements of the fastening joints that determine a stable bond of the crate sidewalls with its bottom, may come to be at least in part interengaged, but in any case these elements are inter= engaged at least upon effecting the raising of the crate sidewalls with respect to the crate bottom. On completion of the raising of the sidewalls of the crate, which is preferably effected according to a particular order of succession, there come to be interengaged also the cooperating connection elements of the fastening joints that determine a stable reciprocal bond of the crate sidewalls.

Both the above-disclosed first and second operations for assembling the crate may be at will carried out either manually or mechanically. The simple crate-assembling movements render it possible to easily achieve an automatic assembly.

The said two successive operations may be effected either directly the one after the other during only one assembly step, and possibly also with only one apparatus, or at same distance of time between them. Thus, for example, the crate bottoms and sidewalls may be stored and forwarded to a user in their separate condition and in corresponding stacks, and in this case the user must perform both of the said operations in order to assemble the crates. When, instead, the bottom and the sidewalls of the crate are provided with hinged and/or fastening joints, and their elements become interengaged already with the above mentioned first operation, that is through the translation for approaching the crate sidewalls to its bottom, parallelly to the assembly plane, whereby the crate sidewalls are tied to the crate bottom still before being erected with respect to the bottom itself, it is possible to store and forward to the user already partly assembled crates, that is, crates with their sidewalls already attached to their bottoms, but still coplanar thereto. In this case, with the first crate-assembling operation, partially assembled or pre-assembled crates are thus obtained, which are a plane (flat) development of the crates themselves, and which can be stacked, and then stored and transported in a very little cumbersome manner. The user must then perform only the second above-mentioned operation, that is, he must raise by about 90° the side= walls of the crates with respect to their bottoms, in order to accomplish the final assembly of the crates.

According to one further advantageous embodiment of the invention, the sidewalls and the bottom of the crate are manufactured of one piece by being connected at the lower side edges of the crate by means of flexible or pliable articulated connection tongues which constitute the articulation means between the crate sidewalls and its bottom. By this second embodiment, the first operation for assembling the crate according to the first embodiment, that is, the reciprocal fastening of the special hinged connection elements provided on the bottom and on the sidewalls of the crate, is avoided. The crate according to the said second embodiment is initially manufactured already as a shaped, substantially flat single unit of plastic material comprising the crate bottom and its four sidewalls which are made integral with the bottom itself by means of articulated connection tongues provided in a number of at least one, and preferably of at least two, on each side edge of the crate bottom. These shaped flat units can be stacked the one upon the other and then stored and transported with very small overall dimensions and in a simple and economical manner. In order to form this crate, only the above-mentioned second operation for assembling same should be performed, that is, the crate sidewalls should be raised with respect to the crate bottom by an angular movement through about 90°, by deflecting or bending the respective articulated connection

0073357

tongues and by engaging, on completion of said movement, the connection elements provided on the crate sidewalls and on the crate bottom, so as to establish the fastening joints between the bottom and each sidewall and between the adjacent sidewalls of the crate.

A further object of the invention is to provide an apparatus for assembling the above-disclosed crates, which is adapted for mechanically performing the said second crate-assembling operation, that is, the raising and the locking of the crate sidewalls to the crate bottom and to each other, the crate sidewalls being already articulated to the crate bottom either through a previous first operation for fastening the hinged connection elements, or by means of articulated connection tongues integrally formed with the bottom and the sidewalls of the crate.

The invention aims to provide a simple, light, not cumbersome, cheap apparatus of the aforementioned type, which can be actuated with little effort by only one person.

The crate-assembling apparatus according to the invention is characterized in that it comprises a crate bottom-carrying frame which is adapted for supporting and positioning the crate bottom, and sidewall folders which are respectively associated to each one of the crate sidewalls, these folders being mounted with respect to the crate bottom-carrying frame so as to be rockable about shafts arranged parallel to the respective side edges of the crate bottom, and being operatively connected to driving means which are adapted for moving upon control the said folders from an opened rest position, to a closed folding position substantially at right angles to the plane of the crate bottom-carrying frame and corresponding to the erected position of the crate sidewalls with respect to the crate bottom.

These and other characteristic features of the invention, and the advantages arising therefrom will appear evident from the following specification of some preferred embodiments thereof, which are shown by way of non-limiting examples in the accompanying drawings, in which:

Figures 1 and 2 are plan views showing a part of the bottom of a first embodiment of the crate according to the invention and two of its sidewalls before and after having been translationally moved near to the crate bottom;

Figure 3 shows in an enlarged scale a set of hinged joints and of fastening joints between the bottom and one of the sidewalls of the crate according to Figures 1 and 2;

Figures 4 and 5 are section views in an enlarged scale, taken on line IV-IV of Figure 3, and showing the elements for the hinged connection of a hinged joint, after the translation for moving one of the crate sidewalls near to its bottom (Figure 4), and after the raising of said sidewall with respect to the bottom of the crate (Figure 5);

Figures 6 and 7 are section views in an enlarged scale, taken on line VI-VI of Figure 3, and showing the connection elements of a temporary fastening joint after the translation for moving one of the crate sidewalls near to its bottom (Figure 6), and after the raising of said wall with respect to the bottom of the crate (Figure 7);

Figures 8 and 9 are section views in an enlarged scale, taken on line VIII-VIII of Figure 3, and showing the connection elements of a fastening joint after the simple translation for moving one of the crate sidewalls near to its bottom (Figure 8), and after the raising of said sidewall with respect to the bottom of the crate (Figure 9);

Figures 10 and 11 show in an enlarged scale and according to section X-X of Figure 2, the connection elements of a further fastening joint after the translation for moving one of the crate sidewalls near to its bottom (Figure 10) and after the raising of said sidewall with respect to the bottom of the crate (Figure 11);

Figures 12 and 13 are two different perspective views, in an enlarged scale, showing one of the connection elements of a fastening joint between two sidewalls of the crate;

Figures 14 and 15 show in an enlarged scale and in vertical section the two connection elements of a fastening joint between two sidewalls of the crate, before and after these elements having been connected together. In Figure 15 there is also shown a portion of a superposed crate;

Figure 16 is a plan view showing a shaped flat one-piece element from which a second embodiment of the crate according to the invention is made by means of the erection of its four sidewalls;

Figure 17 is a plan view in an enlarged scale showing a set of fastening joints between the bottom and one of the sidewalls of the crate, as provided on the shaped flat one-piece element according to Figure 16, with an articulated connection tongue associated thereto;

Figures 18 and 19 are section views on line XVIII-XVIII of Figure 2, showing an articulated connection tongue before and after the erection of the crate sidewall with respect to its bottom;

Figure 20 is a side elevational view showing the position of one of the handles of the crate according to the invention, upon which another crate is superposed;

Figure 21 is a view in an enlarged scale, showing a section on line XXI-XXI of Figure 20;

Figure 22 is a perspective view showing the corner portion of the crate according to the invention, after the erection of one pair of its opposite sidewalls, and at the time of the erection of its other sidewall pair;

Figure 23 is a vertical section view showing an apparatus according to the invention for assembling the crates according to Figures 1 to 22;

Figure 24 is a vertical section of said apparatus, taken on line XXIV-XXIV of Figure 23;

Figure 25 shows in an enlarged scale the detail of a sidewall folder as shown in Figure 23;

Figure 26 shows in an enlarged scale the detail of a sidewall folder according to Figure 24.

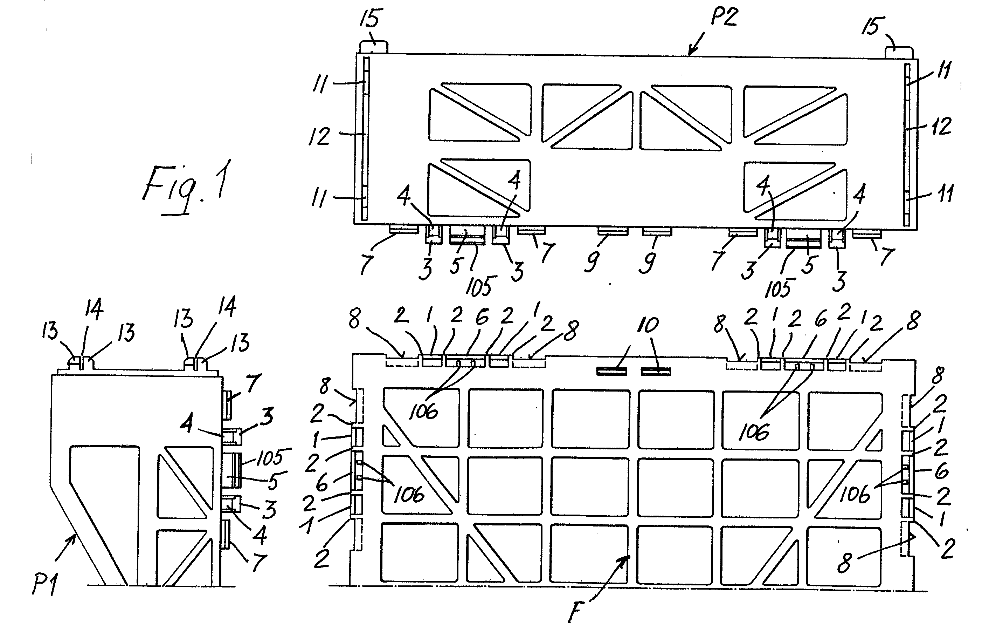

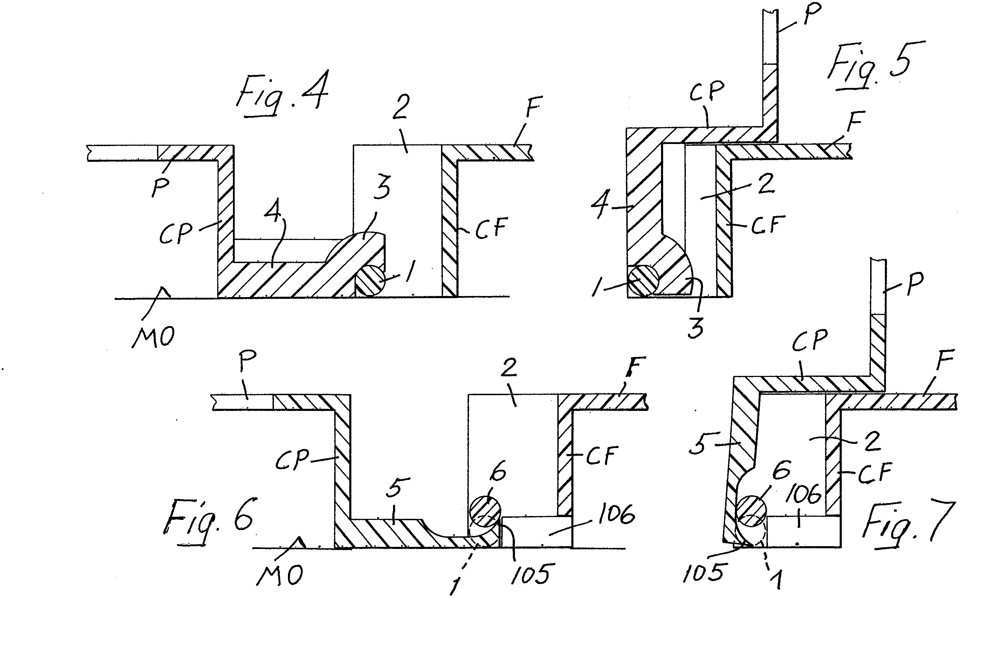

Referring to Figures 1 to 15, the crate according to the invention, which is meant for the packaging of any products, and more particularly of agricultural products, consists of a rettangular bottom F and of four sidewalls P, of which only the two sidewalls P1 and P2 are shown in the Figures. Both the bottom F and the sidewalls P are made of plastic material and are preferably manufactured by injection molding. The bottom F and the sidewalls P may present any suitable structure, and may be formed, as shown, or may not be formed, with apertures and with any desired reinforcement and stiffening ribs, flanges, flat edges and/or grooves. In the shown embodiment, the bottom F has a lower peripheral edge or rib CF at right angles with the plane of bottom F. Also each one of the sidewalls P has a peripheral step or rib CP which is perpendicular to the plane of the respective wall P and which, once the crate has been assembled, comes to be, for example, situated on the outer side of wall P, so as to bear on the edge of bottom F, as it appears particularly evident from Figures 4 to 11.

The bottom F and the walls P of the crate accord= ing to the invention are manufactured separately, and are then mutually joined by fitting. For this purpose, the invention provides two main types of joints, more parti= cularly, a hinged joint type, and a fastening joint type.

The hinged joint comprises two complementary hinged connection elements which may be made in different manners. In the shown embodiment, one of these elements of the hinged joint consists of a pin 1 which is parallel to the edge and to the plane of bottom F, and is provided between two small flanges 2 projecting outward from the peripheral rib CF of bottom F. The other element of the hinged joint consists of a hinged connection bush sector 3 correlative to the hinge pin 1. This hinge sector 3 is provided at the end of an arm 4 projecting from the peripheral rib CP of sidewall P. When the sidewall P and the bottom F are arranged in a coplanar relation, with their peripheral ribs CP and CF bearing on a common, assembly surface MO, substantially horizontal, as shown in Figures 4, 6, 8 and 10, the arm 4 with its hinge sector 3 projects outwardly from the peripheral rib CP of sidewall P, parallel to the assembly surface MO and preferably bears thereon. From a plane parallel to the assembly surface MO and passing through the axis of the hinge pin 1, the hinge sector 3 extends angularly upwards by an angle substantially equal to 90°, preferably greater than 90° but smaller than 180°, for example by an angle ranging between 120° and 140°, as shown in Figures 4 and 5.

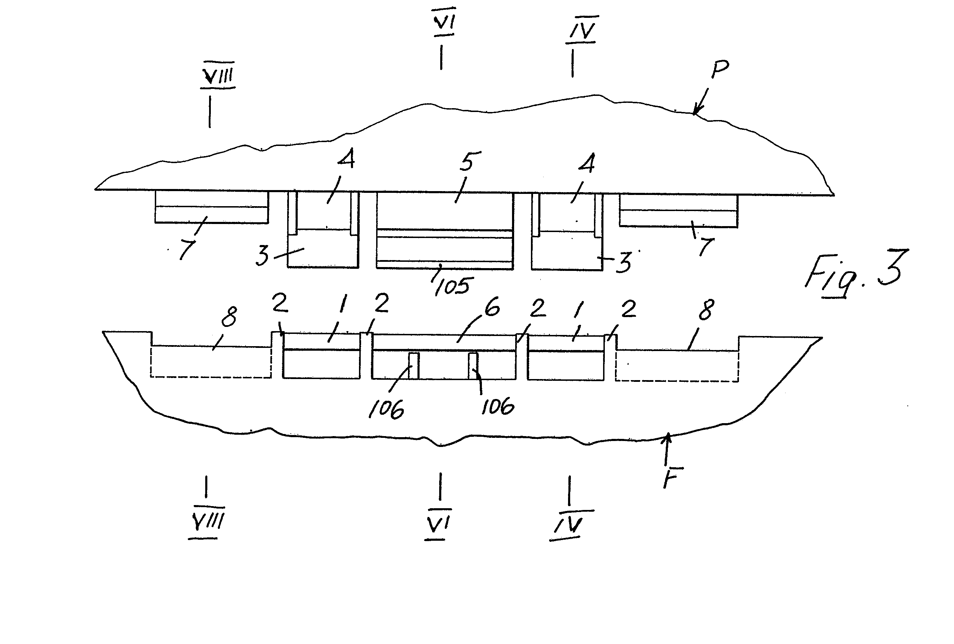

The fastening joints comprise each two cooperating connection elements which may be made in several different manners. The embodiment shown particularly in Figures 6 and 7, relates to temporary fastening joint one connection element of which consists of a hooked small plate 5 which cooperates with a coupling pin 6. The coupling pin 6 is parallel to the edge and to the plane of bottom F, and is provided between two small flanges 2 projecting outwardly from the peripheral rib CF of bottom F, as shown parti= cularly in Figures 3, 6 and 7. This coupling pin 6 is however offset with respect to the hinge pin 1, more particularly, it is located at a higher level than this pin 1, relatively to the assembly surface MO. The hooked small plate 5 has at its free end a hooked tooth 105 directed upwards.

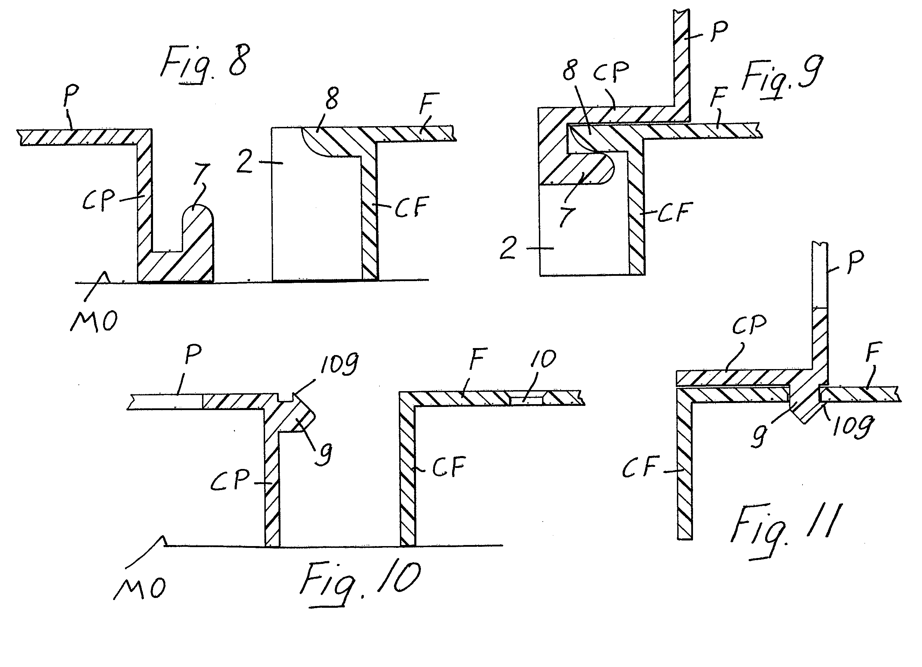

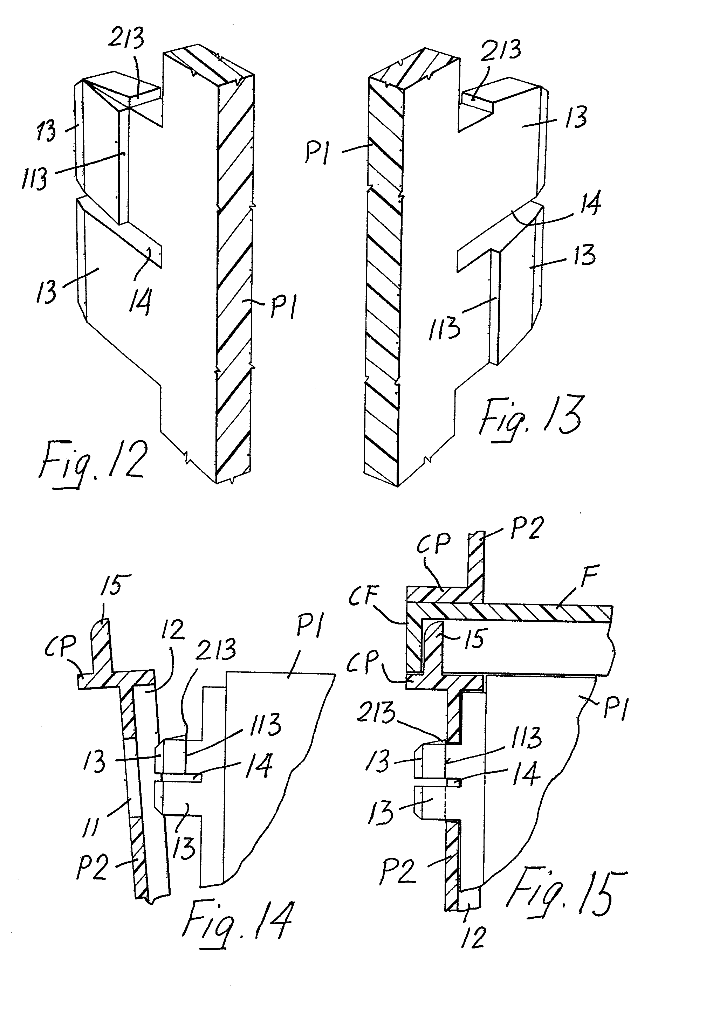

Particularly in Figures 8 and 9 there is shown another type of fastening joint, one connection element of which consists of a U-shaped hook 7 extending from the free end of the peripheral rib CP of sidewall P, so as to open in the upward direction when the sidewall P bears on

0073357

the horizontal assembly surface MO. The said U-shaped hook 7 cooperates with a coupling tongue 8 projecting from the upper part of the peripheral rib CF of bottom F, for example so as to be flush with the plane of bottom F.

A third type of fastening joint is shown parti= cularly in Figures 10 and 11, and consists of a coupling tongue 9 projecting outwardly from the top of the peri= pheral rib CP of sidewall P, and having a check tooth or dog 109, and preferably also a free end with a pointed profile. This coupling tongue 9 cooperates with a corresponding coupling slot 10 provided in the edge part of the plane of bottom F and preferably having a flaring upper portion.

The above-disclosed hinge and fastening joints may be provided in any desired number and in any desired positions along the edges of the associated sides of bottom F and of sidewalls P of the crate, depending upon the length of the respective side of bottom F and the size of the crate, or upon the weight of the products to be carried.

In the embodiment shown in Figures 1 to 3, sets of joints are so provided that each set comprises in median position a provisional fastening joint of the hooked plate 5 and coupling pin 6 type (Figures 6 and 7) and on either side of this joint, a hinge joint consisting of a hinged connection sector 3 and of the respective hinge pin 1 (Figures 4 and 5). Beside the said three joints two other joints are arranged, consisting each of a U-shaped hook 7 and of the corresponding coupling tongue 8. On each one of the longer side edges of the crate bottom F, three sets of joints of the above-disclosed type may be, for example, so provided that one of these joint sets is located in the median part and the other two are located near the ends of the respective side edge. The shorter side edges of the crate bottom F may instead each comprise, for example, only two sets of joints of the above-disclosed type. Between the distinct sets of joints of the above-disclosed type, which is shown particularly in Figure 3, there are, for example, provided pairs of fastening joints of the type having a coupling tongue 9 with a dog 109 and a correlative coupling slot 10 (Figures 10 and 11).

Also between the sidewalls P, in correspondence of each vertical edge of the crate, one or more fastening joints are provided, which may be made in any suitable manner. In the embodiment, shown in Figures 1 to 15, the said joints for the fastening of two sidewalls P1, P2 consist each of a coupling slot 11 provided at the bottom of a groove 12 extending along the internal face of side= wall P2, parallelly to its vertical side edge, and in which the adjacent sidewall P1 is to be engaged by its corresponding vertical side edge. In correspondence of each coupling slot 11, from this vertical side edge of sidewall P1 there project two coplanar coupling tongues 13 which are near to each other, but are separated by a slit or gap 14, as shown particularly in Figures 12 to 15. The free ends of said coupling tongues 13 are substantially made in form of a truncated pyramid or anyhow they have slightly tapering ends. Each coupling tongue 13 also has a lateral check tooth or dog 113. These lateral dogs 113 of the two coupling tongues 13 are provided on opposite sides of said tongues 13, as it appears particularly in the two views of Figures 12 and 13. Moreover, at least one coupling tongue 13 of at least one pair of tongues 13, preferably the upper tongue of the upper tongue pair on a vertical side edge of sidewall P1, has its top edge provided with a transverse check tooth or dog 213, coope= rating with the edge of the respective coupling slot 11. Also the sidewall fastening joints may be provided in any desired number, and may be disposed in any desired manner along the associated vertical side edges of two adjacent sidewalls.

To assemble the crate according to Figures 1 to 15, the bottom F and the four sidewalls P are arranged in a coplanar relation on a generally horizontal assembly surface MO, with the lower side edges of sidewalls P exactly facing the corresponding side edges of bottom F, as illustrated in Figure 1. Subsequently, the sidewalls P are approached and drawn close to the bottom F, one after the other or simultaneously, by a translational movement parallel to the assembly surface MO and perpendicular to the associated side edge of bottom F. Of course the bottom F and the sidewalls P may be suitably guided when this translational movement is performed, preferably also in such a manner as to keep them in contact with the assembly surface MO, that is to say, in such a manner as to prevent their lifting from this plane.

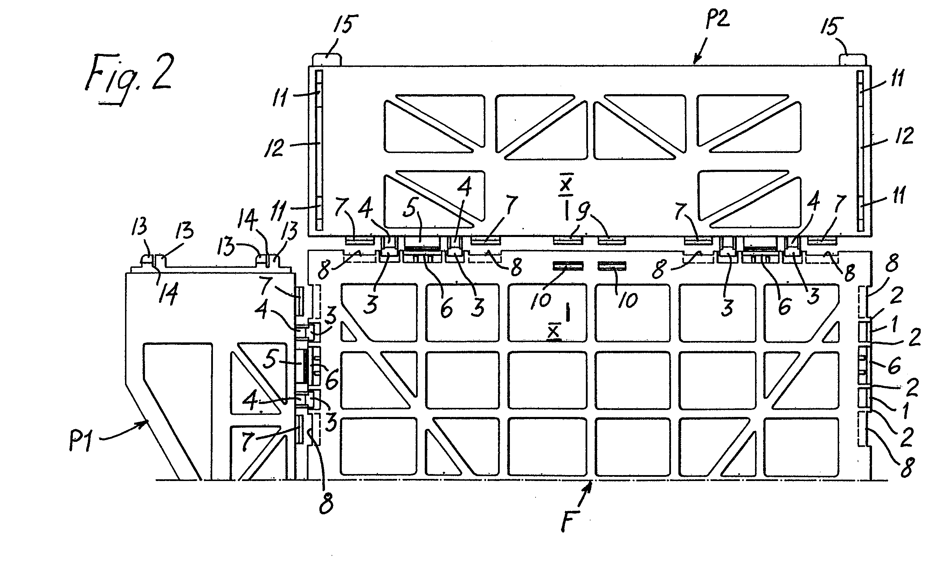

At the end of the approach of the sidewalls P to the bottom F by a coplanar translation thereof, the condition shown in Figure 2 is obtained. More particularly, the elements for the hinged connection of the hinged joints are interengaged that is to say, each hinged connection sector 3 is placed upon the corresponding hinge pin 1, as shown in Figure 4. When the hinged connection sector 3 extends over more than 90°, it snappingly engages the hinge pin 1, thus already determining a certain bond between the sidewall P and the bottom F. The interengaging connection elements of some of the fastening joints, which particularly consist of the U-shaped hook 7 and the respective hook-coupling tongue 8, as well as of the coupling tongue 9 with the dog 109 and its respective coupling slot 10, are not yet engaged the one with the other, but assume the correlative positions shown in Figures 8 and 10. On the contrary, the interengaging connection elements of some provisional fastening joints are already interengaged after the translational movement for drawing the sidewalls P close to the bottom F. More particularly, the hooked end 105 of the hooked plate 5 is snappingly inserted under its corresponding coupling pin 6, preferably as far as to cause it to abut against suitable stops 106, as shown in Figure 6, thus determining a fastening of the respective sidewall P to the bottom F.

Consequently, on completion of the operation for drawing the sidewalls P close to the bottom F by a translation on the assembly surface MO, each sidewall P is provisionally bound to the bottom F at least owing to the provisional fastening joint or joints consisting of the hooked platelets 5, 105 and of their respective coupling pins 6, and possibly also owing to the hinged connection joint or joints, for example when the hinged connection sector 3 extends over more than 90°. Therefore, the side= walls P which are tied to the bottom F in the above- -disclosed manner, are prevented from becoming disengaged or removed from the bottom F, perpendicularly to the corresponding side edges of the bottom itself. Moreover, since the hinged connection bush sector or sectors 3 and the hooked small plate or plates 5, 105 are inserted with a limited play between corresponding small peripheral flanges 2 of bottom F, they also prevent any appreciable relative movement of the sidewalls P and the bottom F along the associated adjacent side edges, as it appears evident from Figure 2.

By the subsequent operation for assembling the crate, the sidewalls P are raised or erected into a position at right angles to the assembly surface MO and to the plane of bottom F, by being pivoted about their hinge joints, that is about the axes of the hinge pins 1, until each sidewall P is caused to assume its final position, in which it bears on the surface of bottom F through its peripheral rib CP, as shown in Figures 5, 7, 9 and 11. During the said raising of the sidewalls P, each hinged connection sector 3 is pivoted about the respective hinge pin 1 and is finally seated behind pin 1, that is, between said pin and the peripheral rib CF of bottom F, as shown in Figure 5. Thus, not only a reliable and exact guiding of the sidewalls P through the angular movement for raising same is obtained, but also a stable fastening of each sidewall P to the bottom F, not allowing any outward movement, parallel to bottom F, which would separate the lower end of wall P from the bottom F.

During the raising of the sidewalls P, each hooked plate 5 is pivoted about the corresponding coupling pin 6, however not co-axially to said pin 6, since in the shown embodiment the said pin 6 is off-center with respect to the hinge pin 1. Consequently, the hooked tooth 105 of plate 5 becomes disengaged from the coupling pin 6, and the hooked plate 5 comes to bear from the outside against the said pin 6. The geometry of the system comprising the hooked plate 5 and the coupling pin 6 can be selected in such a manner that during the raising of sidewall P, the hooked plate 5 is resiliently forced and deflected slightly in the outward direction, so that on completion of the sidewall erection, it resiliently bears from the outside against its respective coupling pin 6, as shown in Figure 7. Thus the hinged connection sectors 3 are maintained resiliently pressed from the interior to the exterior against the respective hinge pin 1, whereby any play of the erected sidewall P, parallelly to the plane of bottom F, is avoided.

Of course, the geometry of the system comprising the hooked plate 5, 105 and the coupling pin 6 may be realized also in such a manner as to avoid any resilient deflection of said plate 5 and/or the disengagement of its hooked tooth 105 from the coupling pin 6, while the raising of a sidewall P is being performed. More parti= cularly, according to one not-shown embodiment of the invention, the coupling pin 6 and the corresponding hooked plate 5 may be substituted with a hinge pin co-axial to pin 1, and with a corresponding hinged connection bush sector which is similar and co-axial to sector 3, but is capsized with respect to this latter, that is to say, it is arranged with its concave part turned upwards.

The elements of the other fastening joints become interengaged at the end of the sidewalls erection. More particularly, the U-shaped hook 7 is engaged from below with the respective coupling tongue 8, as shown in Figure 9, while the coupling tongue 9 is snappingly engaged from above into its respective coupling slot 10 and is fastened to the edge of said slot by means of its dog 109, as shown in Figure 11. The snap fitting of tongue 9 into slot 10 is facilitated thanks to the pointed shape of said tongue 9 and the flared portion of slot 10. In any case, the fastening joints 7, 8, and 9, 10 bind in a vertical direction the bottom F to the erected sidewalls P, and practically sustain the whole weight of the crate load when this crate is lifted up by being held by two opposite sidewalls.

The sidewalls P are raised with respect to the bottom F according to a predetermined order of succession, more particularly, the two opposite sidewalls P1 with the pairs of coupling tongues 13 on both of their vertical side edges are, for example, erected at first, whereupon the other two opposite sidewalls P2 provided with the grooves 12 and the coupling slots 11, are erected. Thus, the pairs of coupling tongues 13 are snappingly engaged in their corresponding slots 11, and are fastened to the edges of said slots through their lateral dogs 113 and their transverse dog 213, as shown in Figures 14 and 15. The bilateral fastening produced by the lateral dogs 113, especially in combination with the fastening produced by the transverse dog or dogs 213, guarantees a reliable and very strong bond between the sidewalls P. Moreover, the edges of sidewalls P1 penetrate into the corresponding grooves of sidewalls P2, thus helping to fix together the raised sidewalls.

As previously mentioned, the crates according to the invention are particularly designed for being stacked the one upon the other. In order to guarantee the stability of a crate stack, at least two opposite sidewalls P may be provided on their top edges, particularly in proximity of the corners of the crate, with projections 15 which come to be located at the interior of the peripheral lower rib CF of the bottom F of a superposed crate, so that they engage the said rib CF with a suitably slack fit, as shown in Figure 15. This manner of fitting an overlying crate by means of the lower peripheral rib CF of its bottom F, onto the top edge projections 15 of the underlying crate, not only prevents any reciprocal lateral movement of the stacked crates, but also helps to keep together, through a "hooping" action, the sidewalls P of the underlying crate.

All the above-disclosed snap connections, as well as any possible deformation, such as for example the inflection of plate 5, can be effected thanks to the particular resiliency which is peculiar to the plastic material of which the bottom F and the sidewalls P are made, and/or owing to any particular construction or weakening of the concerned parts. All the elements of the several hinge and fastening joints are preferably made of one piece with the respective sidewalls and with the bottom of the crate, so that each one of its sidewalls as well as its bottom are elements consisting of one single piece. More particularly, it should be noted that also the snap coupling of the hinged connection elements, parti= cularly the snapping engagement of the bush sector 3 with its respective hinge pin 1, take place through the resilient deformation of at least one of these elements, particularly through the elastic inflection of the arm 4 carrying the bush sector 3 and/or through the elastic inflection of the hinge pin 1.

Instead of effecting by means of fastening joints the connection between the erected sidewalls of the crate in correspondence of their vertical side edges, this connection might be ensured by strapping or hooping effected by means of a metallic and/or plastic strap or wire, or by means of an adhesive tape, or the like, which should be applied at one or more levels through the height of the crate, preferably at least directly below its upper edge. This method is particularly suitable when the used crates should be recovered and disassembled, or at least undone, so as to reduce them to a flat condition by separating their sidewalls one from the other and by arranging same in a position coplanar to their bottom, in order to render possible the stacking of the flattened cases or crates for transportation and storage purposes. Actually, the sidewall fastening joints may present some difficulty in their disconnection.

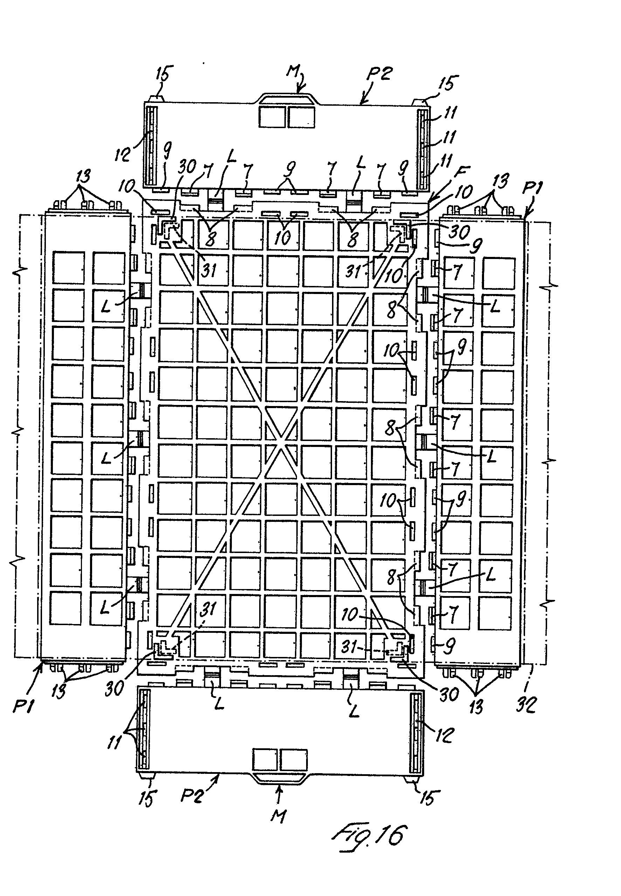

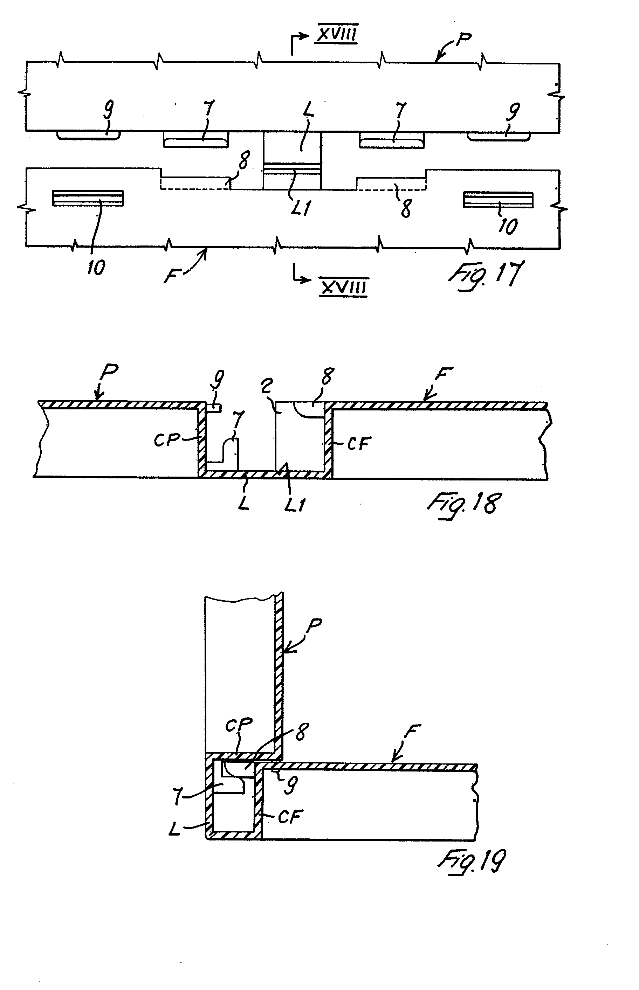

In Figures 16 to 22 there is shown one further embodiment of the crate according to the invention. The parts which have been already described by referring to Figures 1 to 15 are designated by the same reference numerals.

In the embodiment of the crate according to Figures 16 to 22, the hinged joints, according to Figures 1 to 15 are eliminated, and the bottom F and the sidewalls P of the crate are manufactured into one shaped, substan= tially flat single unit, shown in Figure 16, in which the four walls P1, P2 are substantially coplanar to one another and to the bottom F, and are connected thereto by means of articulated connection tongues L which are flexible and/or are made pliable by means, for example, of at least one transversal weakening line L1. On each side of bottom F at least two articulated connection tongues L are preferably provided.

In order to form a crate from the shaped flat unit according to Figure 1, its four sidewalls P1, P2 are erected with respect to its bottom by flexing or bending the articulated connection tongues L, and are connected to the bottom itself and also the one to the other by means of fastening joints. These fastening joints comprise each two cooperating connection elements which may be made in many different manners. In the embodiment shown in Figures 16 to 22, the fastening joints are formed substantially in the same manner as in the embodiment according to Figures 1 to 15. Thus, for example, a kind of fastening joint comprises one connection element consisting of a U-shaped hook 7 projecting from the free end of the peripheral rib CP of sidewall P and opening in the upward direction when the sidewall P is coplanar to the bottom F in the respective initial shaped flat unit. The said U-shaped hook 7 cooperates with a hook-coupling tongue 8 projecting from the peripheral rib CF of bottom F, in correspondence of the upper portion of said rib so as to be, for example, flush with the plane of bottom F. Another kind of fastening joint consists of a coupling tongue 9 projecting outward from the upper portion of the peripheral rib CP of sidewall P, and cooperating with a corresponding coupling slot 10 provided in the marginal part of the plane of bottom F. The coupling tongue 9 may present a pointed end provided with a check tooth or dog, while the slot 10 may have a flared upper portion.

The said fastening joints may be provided in any desired number and in any desired positions on the edges of the associated sides of bottom F and sidewalls P of the crate, depending upon the length of the respective side edge of bottom F and the size of the crate, or upon the weight of the products to be received therewithin. In the shown embodiment, sets of joints are provided, each comprising in median position an articulated connection tongue L and on either side thereof a fastening joint formed by a U-shaped hook 7 and its corresponding coupling tongue 8. Further two fastening joints are arranged beside these two joints and consist each of a coupling tongue 9 and its corresponding coupling slot 10. On each one of the longer side edges of the crate bottom F there may be, for example, provided three sets of joints of the above--disclosed kind, of which one is arranged in the median portion of the respective side edge and the other two are arranged near the ends thereof. Whereas the shorter side edges of the crate bottom F may, for example, comprise each only two sets of joints of the above-disclosed kind.

One or more fastening joints that are formed substantially in the same manner as in the embodiment according to Figures 1 to 15, may be also provided between the sidewalls P, in correspondence of each upright edge of the crate. However, between two sidewalls P1, P2 there are provided three fastening joints consisting each of a coupling slot 11 with a funnel-shaped flaring portion 111, and which is provided at the bottom of a groove 12 extending along the inner face of sidewall P2 parallelly to its vertical side edge and in which the adjacent sidewall P1 is to be engaged by its corresponding vertical edge. From this vertical edge of sidewall Pl there project, in correspondence of each coupling slot 11, two coplanar coupling tongues 13 which are set near to each other but are separated by a slit or gap 14, as shown particularly in Figure 22. The free ends of said coupling tongues 13 are made substantially in form of a frustum of pyramid, or in any case they have slightly tapering ends. Each coupling tongue 13 also has a lateral check tooth or dog 113. These lateral dogs 113 are provided on opposite sides of said tongues 13. Moreover, at least one coupling tongue 13 of at least one pair of tongues 13, and preferably the upper tongue of the upper tongue pair on a vertical side edge of sidewall Pl is provided at its upper edge with a transverse check tooth or dog 213 which cooperates with the edge of its respective coupling tongue 11. Also the fastening joints for the sidewalls may be arranged in any desired manner along the associated vertical side edges of two adjacent sidewalls.

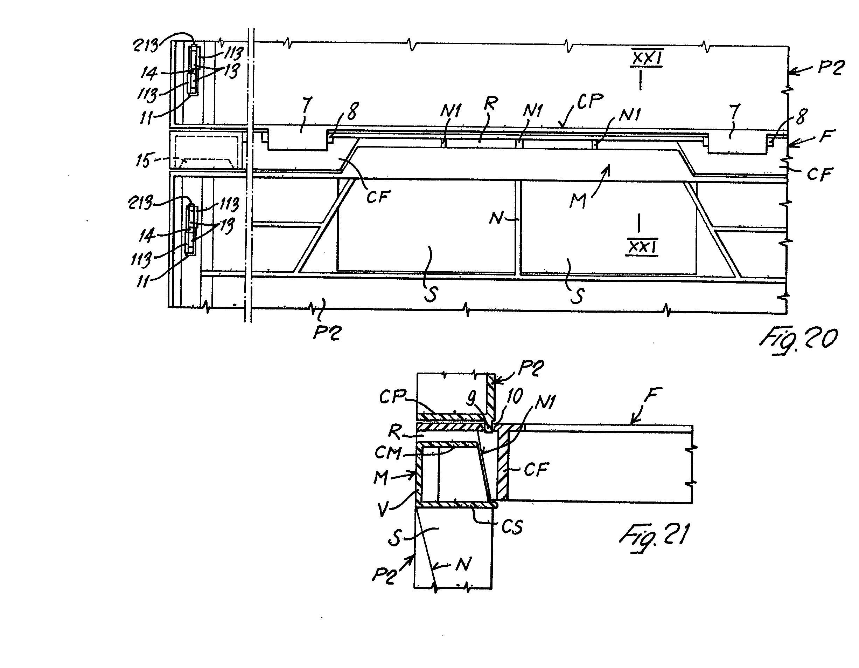

The members of the fastening joints come to be interengaged on completion of the raising of the sidewalls. More particularly, the U-shaped hook 7 is engaged from below with its respective coupling tongue 8, as shown in Figure 19, while the coupling tongue 9 is engaged, possibly it is snappingly engaged from above in its respective coupling slot 10. The sidewalls P are erected with respect to the bottom F according to a predetermined order of succession, more particularly, the two opposite sidewalls Pl having the pairs of coupling tongues 13 at either one of their vertical side edges are, for example, erected in the first place, whereupon the other two opposite sidewalls P2 provided with the grooves 12 and the coupling slots 11, are erected. Thus, the pairs of coupling tongues 13 are snappingly engaged in their corresponding slots 11 and are fastened to the edges of same by means of their lateral dogs 113 and their transverse dog 213. The bilateral fastening as established by the lateral dogs 113, especially in combination with the fastening as established by the transverse dog or dogs 213, guarantees a reliable and very strong bond between the sidewalls P. Moreover, the side edges of sidewalls P1 penetrate into the corresponding grooves in sidewalls P2 thus helping to the fastening of the raised sidewalls.

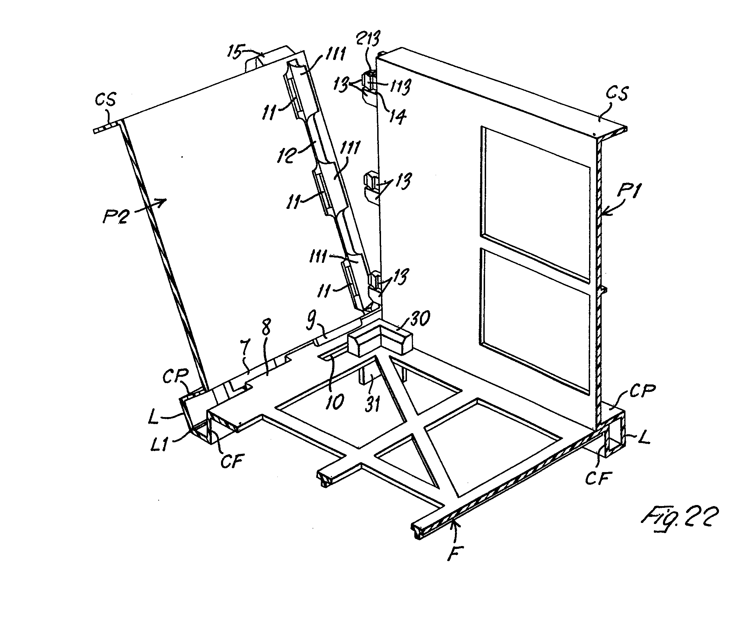

As previously mentioned, the crates according to the invention are particularly designed for being stacked the one upon the other. In order to guarantee the stability of the crates stack, instead of the projections 15, the crates present on each one of the shorter sidewalls P2, a handle M projecting upwardly from the upper edge of the respective sidewall P2 and which is engaged in a corresponding recess R formed in the lower peripheral rib CF of bottom F of a superposed crate, as shown in Figures 20 and 21. More particularly, each handle M is formed by a rib CM provided at a distance over the external peripheral upper rib CS of the respective sidewall P2 so as to be parallel thereto, and which is connected to said rib CS through an external vertical position V, while in the sidewall P2, below its upper rib CS, there is provided an opening S possibly with one or more vertical stiffening

0073357

ribs N, as shown in Figures 20 and 21. The sides of handle M and of the respective recess R for housing same are preferably inclined in such a manner that the handle M and the recess R present in elevation a trapezoidal shape.

In order to ensure the stability of the stacks formed before the erection of sidewalls P with the shaped flat units according to Figure 16, at the corners of bottom F and in a slightly retracted position, there are provided angled projections 30 on the upper face of the bottom itself and associated angled projections 31 on the lower face thereof. The upper projections 30 and the lower projections 31 are arranged in such an offset relation that when the shaped flat units according to Figure 16 are stacked the one upon the other, the lower projections 31 of an overlying shaped unit come to be positioned on the inner side of the upper projections of an underlying shaped flat unit, or vice-versa, whereby any reciprocal sideward movement between the stacked shaped units is prevented.

As it is clearly apparent, in the shaped flat unit according to Figure 16, the bottom F and the sidewalls P of the crate according to the invention present flat and coplanar upper surfaces, with the exception of the shaped unit-matching projections 30. Therefore, and especially when these projections 30 are not provided, or are provided on the edges of bottom F, in order to obtain crates which are light and cheap but at the same time are without openings or apertures, two opposite sidewalls, such as for example the two shorter sidewalls P2, may be made as solid walls, while the bottom F and the other two opposite sidewalls, such as for example the longer sidewalls P1, may be provided with any desired apertures, and a flexible thin sheet 32 of plastic material, shown by dash-and-dot lines in Figure 16, may be glued or welded on their upper surfaces which are flat and coplanar in the shaped flat unit according to Figure 16. In this way, the openings in bottom F and in the two longer sidewalls P1 are closed without compromising the possibility of erecting these two walls P1 with respect to the bottom F, while maintaining all the other advantages of the invention. In the same manner as above disclosed, that is by welding or glueing a thin sheet of plastic material on the corresponding flat surfaces, it is possible to close also any openings in the other two sidewalls, for example, in the shorter sidewalls P2.

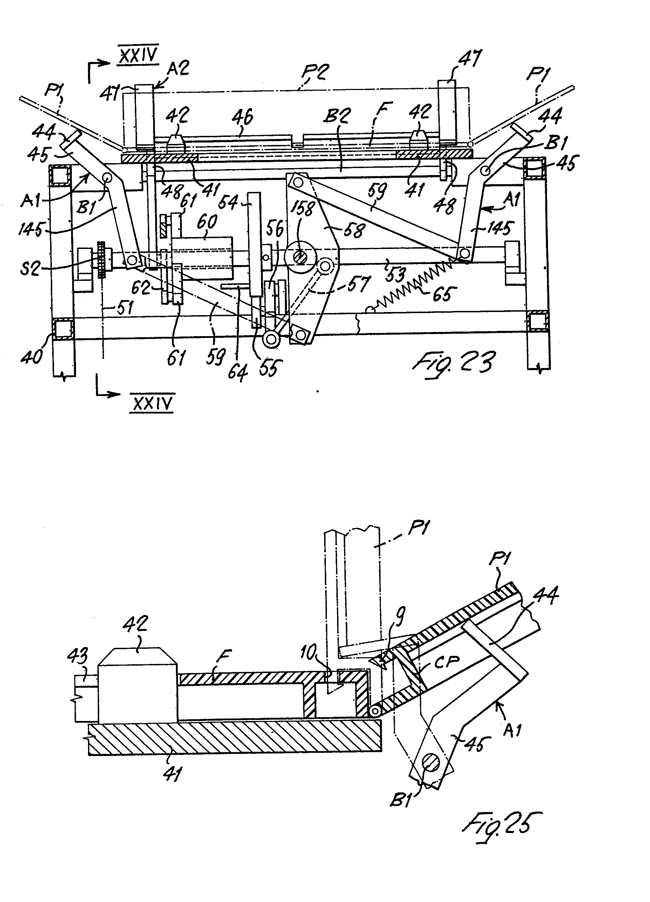

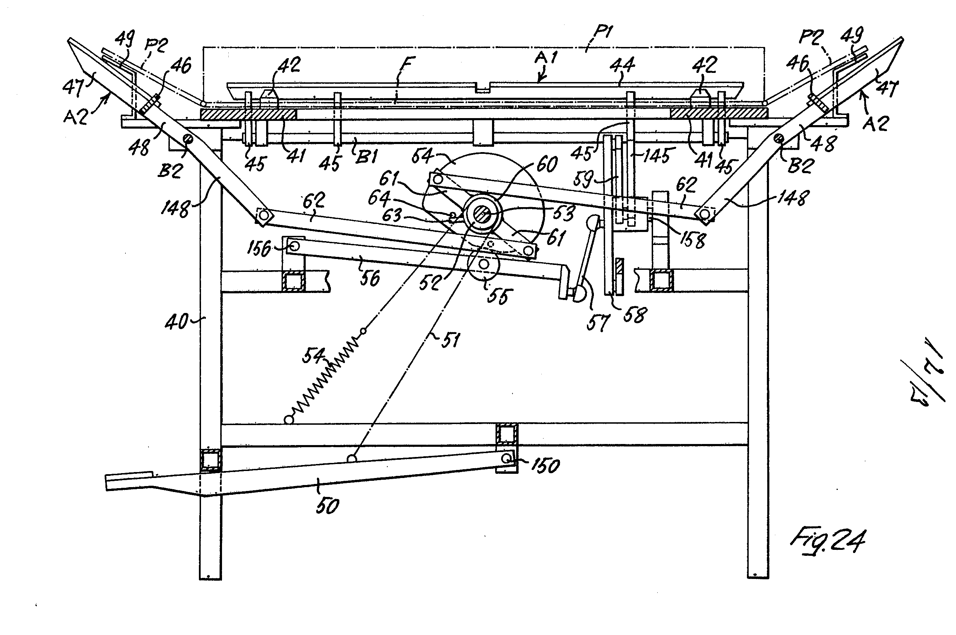

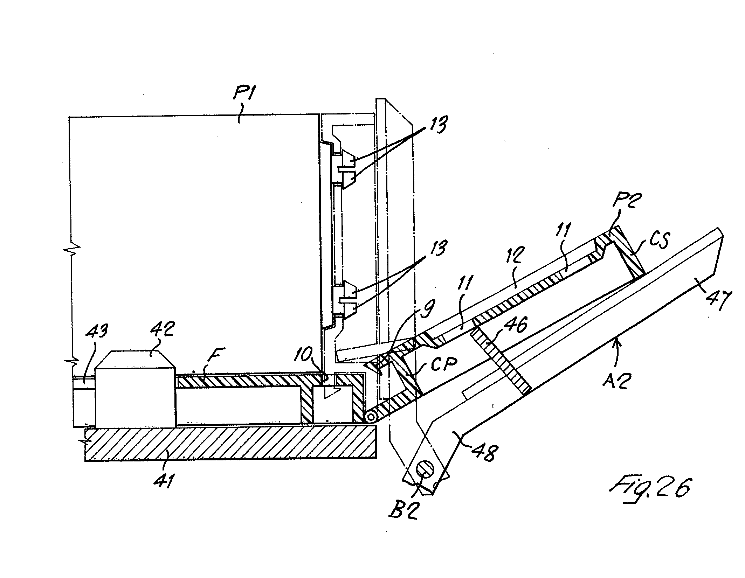

In Figures 23 to 26 there is shown an apparatus by which it is possible to mechanically assemble the crates according to the invention in a quick, simple, accurate manner and with little energy, more particularly, to effect the crate assembling operation consisting in the erection of the crate sidewalls P1, P2 already articulated to the crate bottom F, and in the fastening of these walls P1, P2 both to the bottom F itself and between each other, for example by means of the connection elements 9, 10 and 11, 13 which are diagrammatically shown also in Figures 25 and 26. This crate-assembling apparatus may be therefore used both for the embodiment of the crate according to Figures 1 to 15, after the first crate-assembling operation consisting in the fastening of the crate sidewalls P1, P2 to the crate bottom F by the aid of the hinge joints and the possibly provided temporary fastening joints, thus obtaining a flat development of the crate, and for the embodiment of the crate according to Figures 16 to 22, in which the sidewalls P1 are made of one piece with the bottom F and are already tied thereto by means of the articulated connection tongues. In Figures 23 and 24 the flat development of the crate is shown by dash-and-dot lines.

The apparatus according to the invention consists of a frame 40 which on its top side carries the means for supporting and positioning the bottom F of a flat (plane) development of a crate. The means for supporting the bottom F are constituted by a planar, horizontal bottom-carrying frame 41, while the means for positioning same are constituted by centering dowels 42 with a conical or frustoconical end, and which are engaged in suitable slots 43 provided in bottom F, as it appears particularly in Figures 25 and 26.

To each one of the crate sidewalls P1, P2 there is associated a folder A1, A2 which is mounted on frame 40 so as to be rockable about a horizontal shaft B1, B2 parallel to the respective side of the crate bottom-carrying frame 41. The folders A1 associated to the two walls P1 in the flat development of the crate, which are to be erected in the first place (as described particularly by referring to Figures 12 to 15 and 22), consist each of a folding bar 44 extending horizontally along the respective side of frame 41, and present a great resistance or stiffness to bending stresses. Through its supporting arms 45, this folding bar 44 is secured to its respective shaft Bl which is rotatably mounted in the frame 40 of the apparatus.

The folders A2 associated to the other two side= walls P2 in the flat development of the crate, which are to be erected after the walls Pl (as described herein= above by referring to Figures 12 to 15 and 22), consists each of a folding bar 46 extending substantially horizontally along its respective side of the crate bottom- -carrying frame 41, and of two pressing arms 47 secured at the ends of the folding bar 46 and extending substantially at right angles thereto, in the direction of the height of the respective sidewall P2 of the crate. Also the folding bars 46 present a great resistance or stiffness to bending stresses and through their supporting arms 48 they are secured to their respective shaft B2 which is rotatably mounted in the frame 40 of the device.

The operation of the above-disclosed crate assembling apparatus is as follows. In rest or starting position, the four folders Al, A2 are opened, that is, they are angularly swung outwards about their respective shafts Bl, B2 to such an extent that when the bottom F of a flat development of a crate is laid on the crate bottom- -carrying frame 41 and is fitted in the dowels 42, its sidewalls Pl, P2 are arranged in a more or less outwardly inclined position and rest on the folders A1, A2, or on special, possibly provided supporting arms 49, as shown by dash-and-dot lines in Figures 23 and 24 and by solid lines in Figures 25 and 26. This initial inclination of the sidewalls P1, P2 may vary within very wide limits and may differ very little, or up to about 90° from the fully erected position of said sidewalls P1, P2 with respect to the bottom F. Preferably, however, in their starting position the sidewalls P1, P2 make an angle ranging between 30° and 60° with the plane of the crate bottom-carrying frame 41.

Thereafter only the folders A1 are first closed, that is, they are angularly swung inwards about shafts B1, from the position shown by solid lines in Figure 25 to the position shown by dash-and-dot lines in the same Figure. The folders A1 thus raise the sidewalls P1 with respect to the bottom F of the flat development of a crate, and lock said sidewalls in their erected position to the bottom F by interengaging the connection elements 7, 8 and 9, 10 of the fastening joints, as described hereinabove. For this latter purpose, the folding bars 44 of folders A1 are shaped and arranged in such a manner that toward the end of said angular movement for closing the folders A1, they overlap the external peripheral ribs CP of the respective sidewalls P1 and apply from above a downward pressure on the said ribs CP of sidewalls P1, so as to press them against the underlying edge of bottom F, thus establishing a reliable connection of the fastening joints, particularly the snapping of the coupling tongues 9 provided with check teeth 109 into their respective coupling slot 10.

In a second step, the folders A2 are closed, that is, they are angularly swung inwards about their shafts B2, from the position shown by solid lines in Figure 26 to the position shown by dash-and-dot lines in the same Figure. The action of folders A2 is partly analogous to that of folders A1, that is, they raise the sidewalls P2 into their erected position with respect to the bottom F of the crate, and lock same in said position to the bottom F by applying from above, toward the end of said angular movement for closing the folders A2, a pressure to the peripheral ribs CP of the respective sidewalls P2, by means of the folding bars 46, so as to press the said ribs CP of sidewalls P2 against the underlying edge of bottom F, whereby a reliable connection, as above-disclosed, of the fastening joints 9, 10 is guaranteed. At the same time, toward the end of the angular movement for closing the folders A2, the pressing arms 47 of these folders press the respective outermost portions of the two sidewalls P2 against the facing edges of sidewalls P1, already erected and fastened to the bottom F, thus surely promoting the snapping of the coupling tongues 13 into their respective slots 11, and so the fastening of walls P1, P2 to each other. The crate is thus assembled and can be removed upwardly from the crate-assembling apparatus, while the folders A1, A2 are returned by a reversed angular opening movement into their starting position.

The said movements of folders A1, A2 may be

obtained by means of any suitable driving mechanisms which are in turn actuated by a motor or by the muscular strength of an operator. In the embodiment shown in Figures 23 and 24, at every crate-assembling cycle the operator presses down a foot-lever 50 which is pivotally mounted at 150 onto the frame 40 of the apparatus. To the foot-lever 50 there is connected by one end a chain 51 which is passed around a pinion 52 secured to the shaft 53, and which by its other end is connected through a spring 54 to the frame 40. The shaft 53 is rotatably mounted on frame 40 and is integral with a cam 54 acting upon a roller 55 carried by a rocking lever 56 which is pivotally mounted at 156 onto the frame 40. The other end of the rocking lever 56 is connected through an articulated shaft 57 to a crank plate 58 which from the frame 40 is rotatably supported on a shaft 158 at right angles to the shaft 53 of cam 54. The crank plate 58 is connected at two diame= trically opposed points through link rods 59 to the extensions 145 of two lever arms 45 carrying the folding bars 44 of the two opposite folders Al which are associated to the sidewalls Pl of the crate.

Onto shaft 53 there is mounted a freely rotatable sleeve 60 provided with two diametrically opposed crank arms 61 which through link rods 62 are connected each to the extension 148 of one of the lever arms 48 carrying the folding bar 47 of one of the two folders A2 associated to the crate sidewalls P2. From the sleeve 60 there projects radially a driving pin 63 which cooperates with a driving pin 64 projecting axially from cam 54.

During a first fraction of the rotation of cam 54, as promoted by the foot-lever 50 through the transmission 51, 52, the cam 54 moves only the rocking lever 56 and then, through the crank plate 58 and the link rods 59, it moves only the two folders A1 so as to cause them to be swung upwards from their opened rest position. Thereafter, during one second fraction of the rotation of cam 54, the driving pin 64 of said cam 54 engages the driving pin 63 of the sleeve 60 and entrains this latter in rotation, thus moving through the crank arms 61 and the link rods 62, the other two folders A2 and so causing them to be swung upwards from their opened rest position. At the same time, the cam 54 acts through a circle sector thereof, upon the rocking lever 56 whereby it maintains the first two folders A1 in their erected position. By releasing the foot-lever 50, the springs 54 and 65 return the whole driving mechanism to its starting position.

CLAIMS

1. An assemblable and stackable crate of plastic material, particularly of injection-molded plastic material, for the packaging of any products, particularly of agricultural products, which crate consists of a bottom (F) and of sidewalls (Pl, P2) which in a second operative step are secured in their erected position of use to the bottom (F), characterized in that between each one of the sidewalls (Pl, P2) and the bottom (F) articulated connection means (1, 3, 4; 5, 6; L) are provided, which permit to raise the sidewalls (Pl, P2), initially coplanar to the crate bottom (F), in order to form the crate by an angular movement through about 90°, fastening joints being provided between each one of the sidewalls (Pl, P2) and the bottom (F), as well as between two adjacent sidewalls (Pl and P2), each fastening joint consisting of at least two cooperating connection elements (7, 8; 9, 10; 12; 11, 13) which are interengageable following the relative raising of the crate sidewall or sidewalls with respect to the bottom, and which are adapted for preventing the separation of the crate sidewalls from the bottom perpendicularly thereto, and also the separation of the sidewalls from each other.

2. A crate according to claim 1, characterized in that the crate sidewalls (Pl, P2) are manufactured sepa= rately from its bottom (F) and are joined thereto upon assembling the crate, while the articulated connection means consist of at least one hinge joint comprising at least two complementary hinge connection elements (7, 8;

9, 10) respectively provided on the edges of the bottom (F) and on the corresponding edge of the sidewall (P1, P2) and which can be mutually engaged through the relative translation of the bottom and sidewall into a coplanar position, parallelly to an assembly surface (MO) and perpendicularly to the associated edges of the bottom and sidewall, the said hinge connection elements (7,8; 9,10) being provided in such a manner that they become fastened together not later than the starting of the subsequent raising of the crate sidewall (P1, P2) with respect to its bottom (F), by an angular movement of about 90°, so that any separation is prevented of the sidewall from the bottom in a direction parallel thereto.

3. A crate according to claims 1 and 2, characte= rized in that it comprises at least one hinge joint whose complementary hinge connection elements consist of a hinge pin (1) provided particularly on the side edges of the crate bottom (F) in a parallel relation to said edges, and of a correlative hinge connection bush sector (3) provided particularly on the edge of the sidewall (P1, P2) and extending, in the bottom and sidewall coplanar position, at least in part over that hinge pin median plane which is parallel to the assembly surface, preferably over an angle of about 90°, or over an angle greater than 90° but smaller than 180°.

4. A crate according to claims 1 to 3, characte= rized in that the hinge pin (1) is provided between two small flanges (2) projecting from the side edges of the crate bottom (F), and between which the hinge connection bush sector (3) is fitted with a limited play.

5. A crate according to claims 1 to 4, characte=rized in that the snap engagement of the hinge connection elements, particularly the snap engagement of the bush sector (3) with its respective hinge pin (1), takes place through the elastic deformation of at least one of these elements, particularly of the arm (4) carrying the bush sector (3) and/or of the hinge pin (1).

6. A crate according to claims 1 to 5, characte=rized in that it comprises at least one temporary fastening joint consisting of a platelet (5) projecting from the edge of the sidewall (P1, P2) and which on its free end is provided with a projecting part (105) which after the coplanar translation for approaching the sidewall (P1, P2) and the bottom (F), is snappingly engaged from below with a corresponding coupling pin (6) provided on the side edge of bottom (F), in a parallel relation thereto.

7. A crate according to claims 1 to 6, characte=rized in that the coupling pin (6) is offset with respect to the axis of rotation (1) of the sidewall (P1, P2), when this sidewall is raised with respect to the bottom (F), in such a manner that upon raising the sidewall (P1, P2) with respect to the bottom (F), the platelet (5) comes to be deformed, deflected or bent so as to be resiliently pressed from the exterior against the coupling pin (6).

8. A crate according to claims 1 to 7, characte=
rized in that the projecting part (105) at the free end of
platelet (5) is hook-shaped or is anyhow formed in such a
manner that it becomes disengaged from the respective
coupling pin (6) during the raising of the sidewall (P1,
P2) with respect to the bottom (F).

9. A crate according to claims 1 to 6, characte=
rized in that the coupling pin (6) is co-axial to the axis
of rotation (1) of the sidewall (P1, P2) when this side=
wall is being raised with respect to the crate bottom
(F), while at the free end of platelet (5) there is
provided a sector of a corresponding bush, which sector
extends over an angle of about 90° or over an angle
greater than 90° but smaller than 180°, and has its
concave part pointing upwards, so that it is engaged from
below with the respective coupling pin (6) when the
coplanar translation for approaching the sidewall (P1, P2)
and the bottom is being performed, and it is pivoted about
the coupling pin when the crate sidewall is being raised
with respect to the crate bottom.

10. A crate according to claims 1 to 9, characte=
rized in that the coupling pin (6) is provided between two
small flanges (2) projecting from the side edges of the
crate bottom (F), and between which the respective platelet
(5) is fitted with a limited play in the longitudinal
direction of the respective edge of bottom (F).

11. A crate according to claim 1, characterized in that the crate sidewalls (P1, P2) and the crate bottom (F) are manufactured of one piece and are interconnected in correspondence of the lower edges of the crate by means of flexible or pliable articulated connection tongues which constitute the hinge means between the crate sidewalls (P1, P2) and the crate bottom (F).

12. A crate according to claim 11, characterized in that each articulated connection tongue (L) has at least one transverse weakening and bending line (LI).

13. A crate according to claims 11 and 12, characterized in that on each one of the side edges of the crate bottom (F), at least two articulated connection tongues (L) are provided in a spaced apart relation.

14. A crate according to claims 2 or 11, characte= rized in that it comprises at least one fastening joint consisting of a hook 7, such as for example a U-profiled hook, which is provided on one edge of the sidewall (P1, P2) and which after the raising of the sidewall with respect to the bottom, is adapted for being engaged from below with a coupling tongue (8) projecting from the edge of the bottom (F).

15. A crate according to any one of claims 2 or 11, characterized in that it comprises at least one fastening joint consisting of a coupling projection (9) with at least one check tooth (109), which is provided on one edge of the sidewall (P1, P2), the said coupling projection being snappingly engaged from above, on completion of the raising of the sidewall with respect to the bottom, in a corresponding opening (10) provided in the bottom (F) and is fastened to the edge of said opening (10) by means of its check tooth (109).

16. A crate according to any one of claims 2 or 11, characterized in that at least one fastening joint between two adjacent sidewalls (P1, P2), which are preferably raised the one after the other with respect to the bottom (F), comprises a projection (13-13) provided with one or more check teeth (113, 213) and protruding from the vertical edge of one of the sidewalls (P1), the said projection (13-13) being engaged in a corresponding coupling aperture (11) provided in the marginal part of the other sidewall (P2) and having a flared projection-guiding portion (111), so as to be fastened by its check tooth or teeth (113, 213) to the edge of said aperture (11).

17. A crate according to claim 16, characterized in that the coupling projection (13-13) has at least one lateral check tooth (113) on at least one of its sides and at least one transverse check tooth on its upper and/or lower edge.

18. A crate according to claims 16 and 17, characterized in that the coupling projection consists of a pair of overlying coplanar tongues (13) arranged in a vertically spaced apart relation and having each a lateral check tooth provided on opposite sides thereof, while at least the upper tongue (13) has a transverse check tooth (213) on its edge which is opposite to the other tongue.

19. A crate according to any one of claims 2 or 11, characterized in that one of two adjacent sidewalls (Pl, P2) is fitted by its vertical side edge in a corresponding groove (12) provided in the other of said sidewalls.

20. A crate according to any one of claims 2 or 11, characterized in that its bottom (F) has a peripheral rib (CF) extending downward all around the bottom itself.

21. A crate according to any one of claims 2 or 11, characterized in that its sidewalls (Pl, P2) have at least on their bottom edge, an outer rib (CP) by which they bear, after the raising of said sidewalls with respect to the crate bottom, on the surface of the bottom itself.

22. A crate according to any one of claims 2 or 11, characterized in that at least two opposite sidewalls thereof present, preferably in proximity of the crate corners, upper projections (15) which are engaged in corresponding lower recesses provided in the bottom (F) of a superposed crate, so as to prevent any relative sidewise movements between stacked crates.

23. A crate according to any one of claims 2 or 11, characterized in that the fastening joints for connection of its erected sidewalls in correspondence of their upright edges, may be at least in part replaced and/or completed by a strapping or hooping effected by means of a metallic and/or plastic strap or wire, and/or by means of an adhesive tape, or the like, to be applied at one or more levels through the height of the crate, preferably at least directly below its upper edge.

24. A crate according to any one of claims 2 or 11, characterized in that in order to help the stacking of the assembled crates and to facilitate their manipulation, the crates are provided on two opposite sidewalls (Pl, Pl), with handles (M) which project from the upper edge of the respective sidewall, and are adapted for being engaged with a shape-mating relation, in corresponding recesses (R) provided in the bottom of the superposed crate.

25. A crate according to claim 24, characterized in that each handle (M) is obtained by means of at least one opening (S) provided in the respective sidewall (Pl) and by means of a raised section (CM,CS,V) for strenghtening the upper edge of sidewall (Pl) in correspondence of said opening (S).

26. A crate according to any one of claims 2 or 11, characterized in that in order to help the stacking of the shaped flat units consisting of the crate sidewalls (Pl, P2) which are coplanar to the crate bottom (F) and are connected thereto through the articulated connection means, cooperating anti-sliding and centering means (30, 31) are provided on both upper and lower sides of said shaped flat units, in correspondence of the bottom and/or of the sidewalls of the crate.

27. A crate according to claim 26, characterized in that the cooperating anti-sliding and centering means are in form of offset and/or complementary projections (30, 31), and/or of male-female coupling means.

28. A crate according to any one of claims 2 or 11, characterized in that the bottom (F) and at least two opposite sidewalls thereof, preferably the longer sidewalls (P2), present an apertured or flat lattice construction, with the surfaces of the bottom and the said two sidewalls of the crate being substantially flat and coplanar in the flat condition, preferably on its upper side which is intended to form the inner surface of the crate, a flexible thin sheet (32) of plastic material being glued or welded on the shaped flat unit, in correspondence of the bottom and the said two sidewalls of the crate.

29. A crate according to claim 28, characterized in that the other two opposite sidewalls (P1) thereof are made as solid walls, or also present an apertured or flat lattice construction and have a flexible thin sheet of plastic material glued or welded thereon.

30. An apparatus for assembling the crates according to any or more of claims 1 to 29, by starting from a flat (plane) development of the crate, which consists of the crate bottom (F) and of the crate sidewalls (P1, P2)

0073357

already articulated to the bottom itself, characterized in that it comprises a crate bottom-carrying frame (41) which is adapted for supporting and positioning the crate bottom (F), and sidewall folders (Al, A2) which are associated each to one of the sidewalls (Pl, P2) and are rockably mounted with respect to the crate bottom-carrying frame (41), about shafts (Bl, B2) arranged parallel to the respective side edges of the bottom (F) and operatively connected to driving means (50 - 65) which are adapted for moving upon control the said folders (Al, A2) from an opened rest position, outwardly inclined with respect to their position at right angles to the plane of the crate bottom-carrying frame (41, 42), to a closed sidewall folding position substantially at right angles to the plane of the crate bottom-carrying frame (41), and corresponding to the erected position of the crate side= walls (Pl, P2) with respect to the crate bottom (F).

31. An apparatus according to claim 30, characte= rized in that each one of the folders (Al, A2) comprises a sidewall folding bar (44, 46) extending along the respective side of the crate bottom-carrying frame (41) in a parallel relation thereto, and in the closed or sidewall folding position of a folder (Al, A2), engages from above an outer lower rib (CP) of the respective sidewall (Pl, P2), so as to press the said rib against the underlying edge of the crate bottom.

32. An apparatus according to claims 30 and 31, characterized in that the folders (A2) which are associated to the two crate sidewalls (P2) that should be erected by the second sidewall folding step, at the end zones of these sidewalls (P2) present sidewall-pressing arms (47) which are substantially perpendicular to the respective side edges of the crate bottom-carrying frame (41) and extend over the entire height of the respective sidewalls (P2), so as to apply thereon, in the closed or sidewall folding position of folders (A2), a pressure toward the facing edges of the other two already erected sidewalls (P1) of the crate.

33. An apparatus according to any one of claims 30 to 32, characterized in that the means for actuating the sidewall folders (A1, A2) comprise a main shaft (53) which is driven by a motor or by the muscular strength of an operator, and is integral with a cam (54) which is connected to two opposite folders (A1), by means of a rocking lever (56) connected to a crank plate (58) which through link rods (59) is articulated to the said folders (A1), while a sleeve (60) is connected by means of two crank arms (61) and respective link rods (62) to the other two opposite folders (A2) and can be entrained in rotation with a phase difference with respect to the actuation of the first-mentioned two sidewall folders (A1).

Fig. 1

Fig. 2

Fig. 3

Fig. 4

Fig. 5

Fig. 6

Fig. 7

Fig. 8

Fig. 9

Fig. 10

Fig. 11

5/13

0073357

Fig. 12

Fig. 13

Fig. 14

Fig. 15

Fig.16

Fig. 17

Fig. 18

Fig. 19

213 113
14 13
113
11

7 8 N1 R N1 CP N1 7 8 F
XXI P2
CF
15
CF M
N
213 113 XXI
14 13
113
11
S S
P2

Fig. 20

CP P2
9 10 N1 F
R
CM
M CF
V
S CS
P2 N

Fig. 21

Fig. 22

Fig. 23

Fig. 25

Fig. 24

Fig. 26